# EUROPEAN PATENT SPECIFICATION

(11) **EP 4 492 027 B1**
(45) Date of publication and mention of the grant of the patent: **12.08.2026**
(21) Application number: 23766825.6
(22) Date of filing: 07.03.2023
(51) Int. Cl.: G01L 5/00, B60B 35/02, F16C 19/18, F16C 41/00, F16C 19/08

(54) **VEHICULAR DETECTION DEVICE**
FAHRZEUGDETEKTIONSVORRICHTUNG
DISPOSITIF DE DÉTECTION DE VÉHICULE

(30) Priority: 07.03.2022 JP 2022034711
(43) Date of publication of application: 15.01.2025
(73) Proprietor: DENSO CORPORATION, Kariya-city, Aichi 448-8661 (JP)
(72) Inventor: KIDA, Yoshihiro, Nisshin-city, Aichi 4700111 (JP); KAWANO, Takanobu, Nisshin-city, Aichi 4700111 (JP); KIMURA, Yusuke, Nisshin-city, Aichi 4700111 (JP); AKAMA, Sadahiro, Kariya- city, Aichi 4488661 (JP); HORIHATA, Harumi, Kariya- city, Aichi 4488661 (JP); OHMI, Tetsuya, Kariya- city, Aichi 4488661 (JP); KITAURA, Yasuhiro, Kariya- city, Aichi 4488661 (JP); KOBAYASHI, Atsushi, Kariya- city, Aichi 4488661 (JP); MORIKAWA, Teppei, Kariya- city, Aichi 4488661 (JP)
(74) Representative: TBK
(86) International application number: PCT/JP2023/008503
(87) International publication number: WO 2023/171649

(56) References cited:
- JP-A- 2006 003 268
- JP-A- 2006 003 268
- JP-A- 2006 258 572
- JP-A- 2006 275 251
- JP-A- 2006 275 251
- US-A1- 2008 144 985

## Description

The present disclosure relates to a detection device for vehicles according to the preamble of claim 1.

### [Background Art]

Conventional bearing units are known to rotatably support a hub fixed to a wheel against a vehicle body, as described in JP 3900031 B2. The bearing unit has an outer ring fixed to the vehicle body, an inner ring fixed to the hub, and rolling elements between the outer and inner rings. Here, in order to stabilize vehicle driving, it is desirable that vehicle driving control be based on forces acting on the wheels (e.g., lateral forces).

As a configuration for detecting forces acting on a wheel, JP 3900031 B2 discloses a ring to be detected, which is disposed on an inner circumference of the inner ring and fixed against the hub, and a displacement sensor unit. The ring to be detected has a cylindrical section and a bent section bent radially outward from an axial end of the cylindrical section. A tip of the displacement sensor unit is located on the inner circumference of the inner ring. A displacement measuring element that opposes the bent section in the axial direction of the bearing unit is disposed at the tip of the displacement sensor unit has.

When a force acts on the wheel, an inclination of a central axis of the inner ring relative to a central axis of the outer ring increases. In this case, the distance in the axial direction between the displacement measurement element and the bent section changes. This change in distance is detected as an axial displacement of the bent section. The detected displacement is then converted into a force acting on the wheel.

Since the bent section is located inside the bearing unit, the axial displacement of the bent section is small when a force acts on the wheel. In this case, there is concern that the accuracy of displacement detection will deteriorate.

JP 2006 275251 A shows a generic detection device for vehicles according to the preamble of claim 1, comprising: a base section fixable to a body of a vehicle; and a bearing having an outer ring member, an inner ring member, and rolling elements disposed between the outer ring member and the inner ring member, the bearing being configured to rotatably support a wheel of the vehicle against the base section; wherein a first bearing member of the outer ring member and the inner ring member is fixable to the wheel, and a second bearing member of the outer ring member and the inner ring member is fixed to the base section. The detection device for vehicles further comprises a disk-shaped rotating section for detection that is disposed to rotate integrally with the first bearing member; and a displacement detection section that is disposed in a non-contact state with the rotating section for detection at a position of the base section that is distant from the bearing in the radial direction and opposite to the rotating section for detection in the axial direction of the bearing and that outputs a signal in response to an axial displacement of the rotating section for detection.

Another detection device for vehicles according to the prior art is shown in JP 2006 003268 A.

### [Summary of the Invention]

It is the object of the present invention to further develop a detection device for vehicles according to the preamble of claim 1 such that it can increase the accuracy of displacement detection.

The object of the present invention is achieved by a detection device for vehicles having the features of claim 1.

Further advantageous developments of the present invention are defined in the dependent claims.

According to the present invention, the rotating section for detection is disposed to rotate integrally with the first bearing member that constitutes the bearing. Therefore, the rotating section for detection rotates integrally with the wheel fixed against the first bearing member.

Here, the axial displacement of the rotating section for detection in the axial direction when a lateral force acts on the wheel increases as it moves radially outward from the first bearing member. The accuracy of displacement detection can be improved by disposing the displacement detection section at a position where displacement is greater. Therefore, in the present disclosure, the displacement detection section is disposed in the base section at a position away from the bearing in the radial direction and opposite to the rotating section for detection in the axial direction. Therefore, the change in the output signal of the displacement detection section (e.g., amplitude of the output signal) in response to a change in the axial displacement of the rotating section for detection can be increased compared to a configuration in which the displacement detection section is disposed in the bearing, for example. This makes it possible to improve the accuracy of the displacement detection by the displacement detection section, and, for example, to improve the accuracy of calculating the lateral force based on the detected displacement.

### [Brief Description of the Drawings]

The above and further advantages, effects and features of the present invention will be made clearer by the following detailed description, given referring to the appended drawings. In the accompanying drawings:
Fig. 1 shows a longitudinal sectional view of a wheel according to a first embodiment;
Fig. 2 shows a plan view of a race section;
Fig. 3 shows a sectional view of an inner ring tilted with respect to an outer ring when a lateral force is applied to a tire;
Fig. 4 shows a detection unit;
Fig. 5 shows an electrical configuration of the detection unit and a processing section;
Figs. 6A, 6B and 6C show a projection of an excitation coil and first and second receiving coils in a plan view of a multilayer substrate;
Fig. 7 shows wiring patterns and vias formed in a first layer of the multilayer substrate;
Fig. 8 shows wiring patterns and vias formed in a second layer of the multilayer substrate;
Fig. 9 shows wiring patterns and vias formed in a third layer of the multilayer substrate;
Fig. 10 shows wiring patterns and vias formed in a fourth layer of the multilayer substrate;
Fig. 11 shows a diagram for explaining the principle of detecting displacement and rotation angle;
Fig. 12 shows another diagram for explaining the principle of detecting displacement and rotation angle;
Fig. 13 shows a simplified plan view of a second receiving coil;
Fig. 14 shows a diagram of output voltage signal of the receiving coil and an envelope of the signal;
Fig. 15 shows a diagram of an envelope of the output voltage signals of the first and second receiving coils;
Fig. 16 shows a characteristic diagram of the relationship between a maximum amplitude of the output voltage signal, displacement, and lateral force;
Fig. 17 shows a plan view of the race section according to a modified example of the first embodiment;
Fig. 18 shows a perspective view of a race section according to another modified example of the first embodiment;
Fig. 19 shows a plan view of the race section according to the modified example of the first embodiment;
Fig. 20 shows a diagram of a race section, a detection unit, and a processing section according to a second embodiment;
Figs. 21A, 21B and 21C show diagrams of the transition of the envelope of the output voltage of each detection unit;
Fig. 22 shows aa race section, a detection unit, and a processing section according to a third embodiment;
Fig. 23 shows a race section and a detection unit according to a fourth embodiment;
Fig. 24 shows a longitudinal sectional view of a wheel according to a fifth embodiment; and
Fig. 25 shows a longitudinal sectional view of a wheel according to a sixth embodiment.

### [Description of the Embodiments]

### <First Embodiment>

The first embodiment embodying a detection device for vehicles of the present disclosure will be described below with reference to the drawings. The detection device of the present embodiment is configured to have: be able to calculate the lateral force acting on a wheel (drive wheel) equipped with an in-wheel motor. A vehicle is, for example, a passenger four-wheeled vehicle with two front wheels and two rear wheels. However, the vehicle may be any vehicle other than a four-wheeled vehicle, such as a two-wheeled vehicle. In addition, the use of the vehicle is not limited to passenger use.

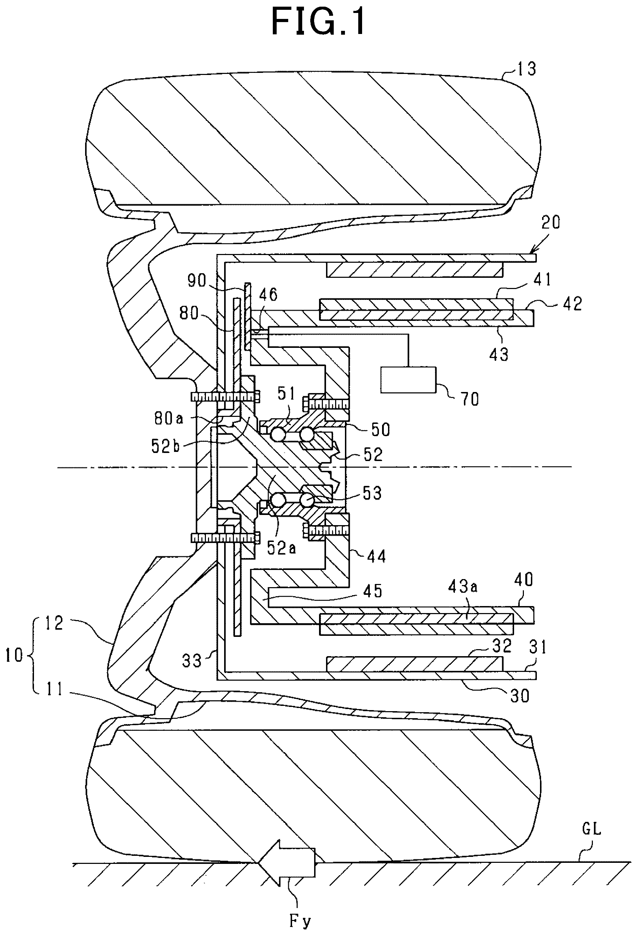

As shown in Fig. 1, a vehicle wheel includes a wheel 10 and an in-wheel motor 20. The wheel 10 includes a cylindrical rim section 11 and a disk section 12 disposed at an outer end of the rim section 11 in a vehicle width direction. A tire 13 is attached to an outer circumference of the rim section 11.

The in-wheel motor 20 is accommodated in an inner space of the wheel 10 enclosed by the rim section 11 and disk section 12 and provides rotational power to the wheel 10. The in-wheel motor 20 is an outer rotor type motor with a rotor 30 and a stator 40 positioned radially inward of the rotor 30.

The rotor 30 has a cylindrical magnet holding section 31 and a magnet unit 32 disposed on an inner circumferential surface of the magnet holding section 31. The magnet holding section 31 faces an inner circumferential surface of the rim section 11 from an outer end to an inner end in the axial direction of the in-wheel motor 20 (the vehicle width direction). The magnet unit 32 has a cylindrical shape concentric with a central axis of rotation of the rotor 30 and has a plurality of magnets fixed to the inner circumferential surface of the magnet holding section 31. In other words, the in-wheel motor 20 of the present embodiment is a surface mounted permanent magnet synchronous motor (SPMSM). In the magnet unit 32, the magnets are arranged so that polarities thereof alternate along a circumferential direction of the rotor 30. As a result, multiple magnetic poles are formed in the circumferential direction in the magnet unit 32. The magnets are, for example, sintered neodymium magnets. Incidentally, the in-wheel motor 20 may be an interior permanent magnet synchronous motor (IPMSM).

The rotor 30 has a disk-shaped flat plate section 33 that is disposed at an outer end of the magnet holding section 31 in the vehicle width direction and connects the magnet holding section 31 and the disk section 12. The disk section 12 is fixed to the flat plate section 33 by bolts. This causes the rotor 30 and the wheel 10 to rotate together.

The stator 40 has a cylindrical stator winding 41 positioned opposite the magnet unit 32 in the radial direction and a cylindrical stator base section 42 disposed on an inner side of the stator winding 41 in the radial direction. The stator winding 41 has a coil side section disposed at a position opposite the magnet unit 32 in the radial direction and coil end sections disposed at both axial ends of the coil side section.

The stator base section 42 is fixed to a vehicle body via, for example, knuckles, and holds the stator winding 41 and other parts. The stator base section 42 has a cylindrical section 43 fixed to the vehicle body. A portion of the cylindrical section 43 adjacent to the stator winding 41 in the radial direction is a stator core 43a.

The stator base section 42 has a fixing section 44 extending radially inward from one end in the axial direction of the cylindrical section 43. The rotor 30 is rotatably supported relative to the stator base section 42 by the fixing section 44 and a bearing 50. An outer radial end of the fixing section 44 is a circular projecting section 45 that projects toward the flat plate section 33. A portion of the projecting section 45 that faces the flat plate section 33 is a flat surface.

The bearing 50 is a rolling bearing (e.g., radial ball bearing) and has an outer ring 51 corresponding to a first bearing member, an inner ring 52 corresponding to a second bearing member, and a plurality of rolling elements 53 (e.g., balls) disposed between the outer ring 51 and the inner ring 52. The outer ring 51 is fixed to the fixing section 44 by bolts. The inner ring 52 includes a cylindrical section 52a that faces the outer ring 51 in the radial direction, and a flange section 52b that extends radially outward from one axial end of the cylindrical section 52a. The flange section 52b is fixed to the flat plate section 33 and the disk section 12 by bolts. Note that Fig. 1 shows a state in which the inner ring 52 and the outer ring 51 are coaxial.

The vehicle is equipped with an inverter electrically connected to the stator winding 41 and an energy storage unit electrically connected to the inverter. The energy storage unit is installed in the vehicle body and is, for example, a storage battery such as a lithium-ion storage battery. Switching control of upper and lower arm switches constituting the inverter is controlled by a control device. This causes the rotor 30 to rotate and the wheel to rotate. Note that the inverter and the control device may be installed in the vehicle body or may be built into the in-wheel motor 20.

A disk-shaped race section 80, which corresponds to a rotating section for detection, and a detection unit 90, which corresponds to a displacement detection section are disposed in the inner space of the wheel 10. The race section 80 and the detection unit 90 are used to calculate a rotation angle (specifically, electrical or mechanical angle) of the rotor 30 of the in-wheel motor 20, the rotation speed of the wheel, and the lateral force Fy acting between the ground surface (ground) GL and the wheel (tire 13). For example, the calculated rotation angle (electrical angle) is used by the control device to control inverter switching, and the wheel rotation speed and lateral force are used by the control device to control vehicle travel.

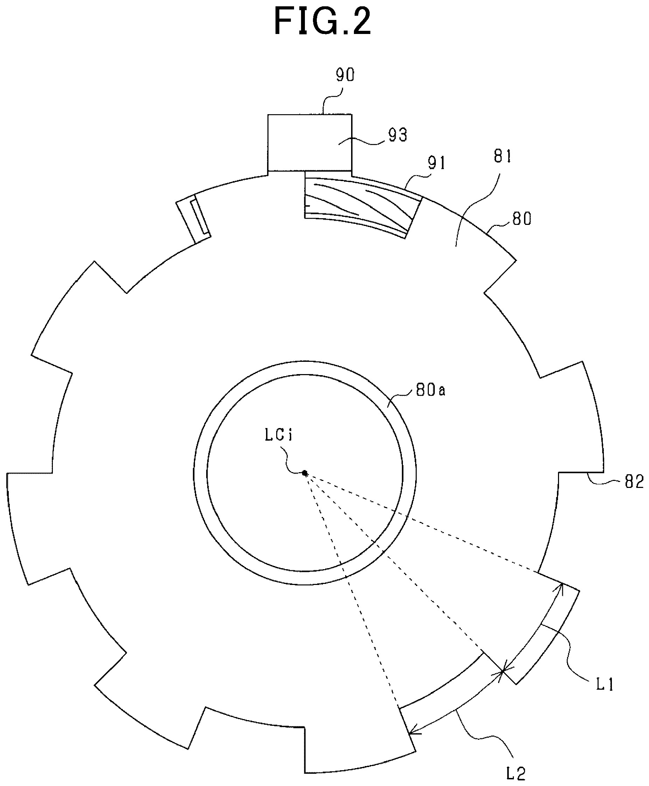

As shown in Figs. 1 and 2, the race section 80 is disk-shaped and made of a metallic material (e.g., iron or aluminum). A through hole is formed in the center of the race section 80.

A peripheral edge of the through hole in the race section 80 is a bent section 80a that bends in the direction of the disk section 12. The bent section 80a is fitted into a through hole formed in the center of the flat plate section 33 of the rotor 30. The race section 80 is fixed by bolts away from the flat plate section 33 of the rotor 30 and in surface contact with the flange section 52b of the inner ring 52. This makes the race section 80 and the inner ring 52 coaxial. The race section 80, the rotor 30 and the wheel 10 rotate together.

An outer radial end of the race section 80 faces the projecting section 45 of the stator base section 42. As shown in Fig. 2, the outer radial end of the race section 80 has shielding sections 81, which are metal portions, and cutouts 82, which are portions pierced in the direction of the thickness of the race section 80, alternating in the circumferential direction. The shielding sections 81 and the cutouts 82 form a circular detection target section. In the present embodiment, a circumferential length L1 of the shielding section 81 and a circumferential length L2 of the cutout 82 are equal. In addition, in the example shown in Fig. 2, there are eight sets of shielding sections 81 and cutouts 82. Note that an LCi shown in Fig. 2 indicates the central axis of the inner ring 52.

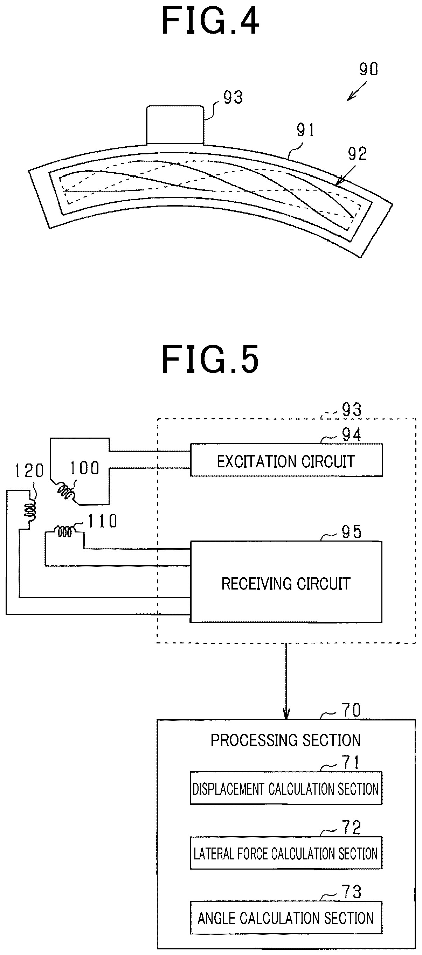

The detection unit 90 is a so-called eddy current inductive sensor. The detection unit 90 has a substrate 91, a coil section 92 on the substrate 91, and a circuit section 93, as shown in Figs. 2, 4, and 5. Fig. 2 shows the race section 80 viewed from the wheel 10 side. Fig. 4 shows the substrate 91 viewed from the wheel 10 side. The substrate 91 is fixed to a flat surface of the projecting section 45. As a result, the substrate 91 extends in a direction perpendicular to the axial direction of the outer ring 51. In the present embodiment, the substrate 91 is fixed to the flat surface of the upper end of the circular projecting section 45.

As shown in Figs. 1 and 5, the circuit section 93 is electrically connected to a processing section 70. In detail, an insertion hole 46 is formed in the projecting section 45, and the processing section 70 and the circuit section 93 are electrically connected via wiring inserted in the insertion hole 46. It should be noted that the processing section 70 may be installed in the vehicle body or built into the in-wheel motor 20.

The coil section 92 includes an excitation coil 100, a first receiving coil 110, and a second receiving coil 120. Each coil 100, 110, 120 is a planar coil. The circuit section 93 composed of an integrated circuit. The circuit section 93 has an excitation circuit 94 that supplies a high-frequency excitation voltage to the excitation coil 100 and a receiving circuit 95, as shown in Fig. 5. When the excitation voltage is supplied to the excitation coil 100, a voltage with the same or equivalent frequency as the excitation voltage is induced in the first receiving coil 110 and the second receiving coil 120. The receiving circuit 95 detects the voltage at both ends of each receiving coil 110, 120 as an output voltage signal.

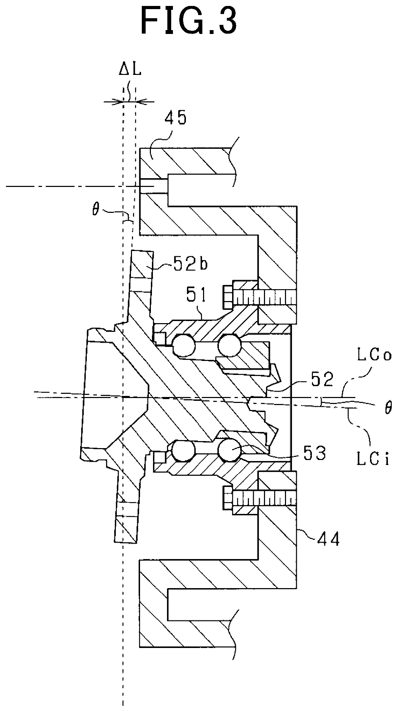

When a lateral force Fy acts on the wheel as shown in Fig. 1, an inclination θ of the central axis line LCi of the inner ring 52 relative to the central axis line LCo of the outer ring 51 increases, as shown in Fig. 3. In this case, an axial distance between each receiving coil 110, 120 and the race section 80 changes, and the amplitude of the output voltage signal of each receiving coil 110, 120 changes. The detection unit 90 calculates a displacement ΔL in the axial direction of the race section 80 based on this amplitude change, and calculates the lateral force Fy based on the calculated displacement ΔL.

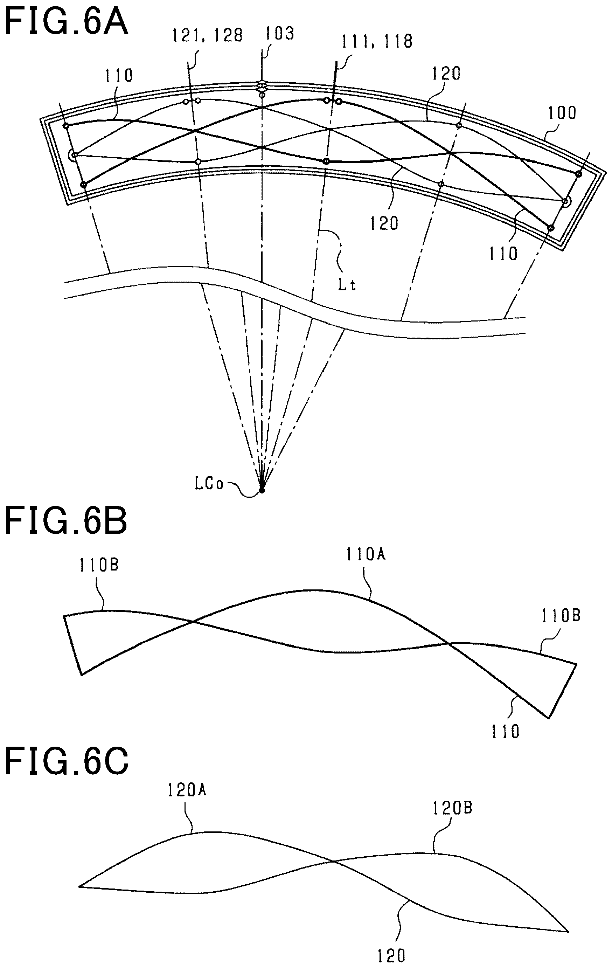

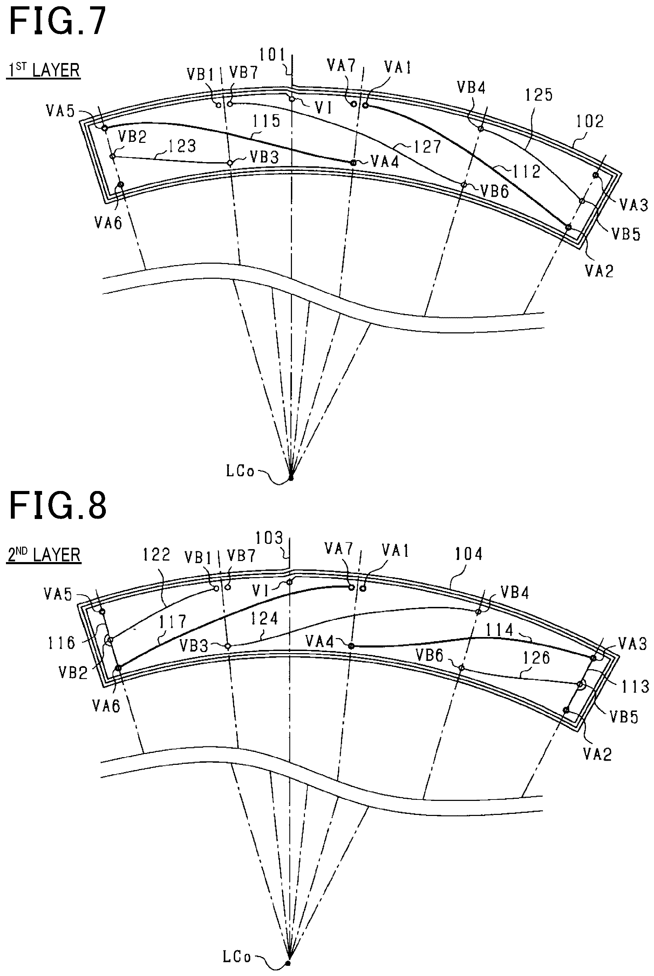

Next, the coil section 92 is described using Figs. 6 through 10. In the present embodiment, the substrate 91 is a multilayer substrate (specifically, a four-layer substrate), and the excitation coil 100 and each of the receiving coils 110, 120, which constitute the coil section 92, are composed of wiring patterns on the multilayer substrate. Figs. 7 through 10 show the wiring patterns formed in each layer when the substrate 91 is viewed from the race section 80 side. Fig. 6A shows the projection of second through fourth layer wiring patterns onto a first layer wiring pattern.

First, the excitation coil 100 is explained. The excitation coil 100 is formed in the first and second layers adjacent to the substrate 91 in the thickness direction, as shown in Figs. 7 and 8. The wiring patterns in each layer are electrically connected by conductors filled in excitation side vias VI. In the first layer, a first excitation end 101 electrically connected to the excitation circuit 94 and a first excitation pattern 102 formed in a clockwise multiple (three times) circumference from the first excitation end 101 to the excitation side via VI are formed as a wiring pattern. In the second layer, a second excitation end 103 electrically connected to the excitation circuit 94 and a second excitation pattern 104 formed by counterclockwise multiple (three times) circumferences from the second excitation end 103 to the excitation side via VI are formed. As a result, six-turn planar coil excitation coils 100 are formed on the substrate 91. The excitation coil 100 is arc-shaped, extending in the circumferential direction of the outer ring 51.

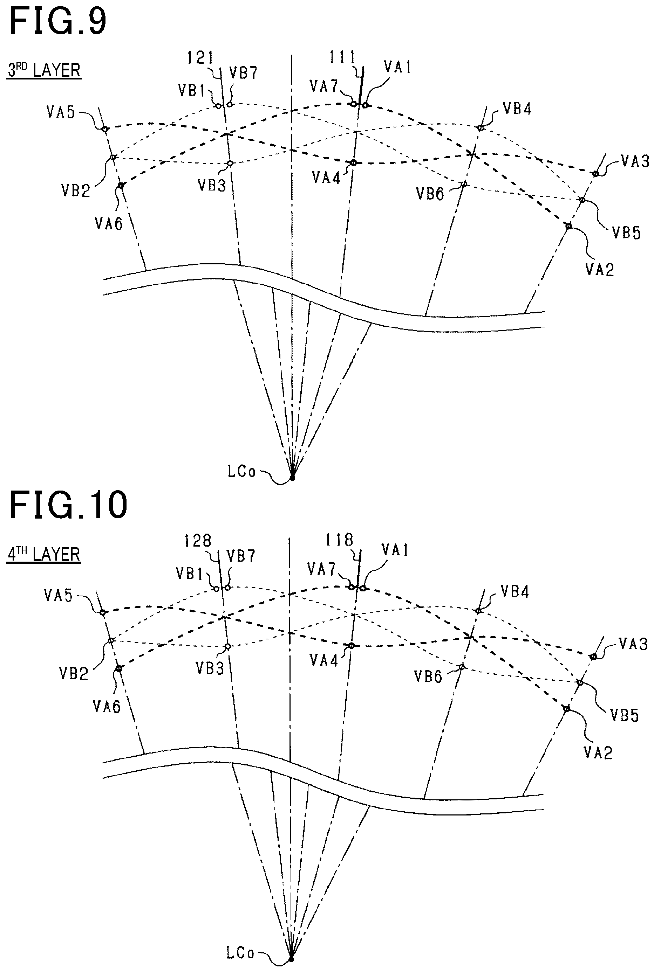

Next, the first receiving coil 110 is explained. The first receiving coil 110 is formed in layers 1 to 4, as shown in Figs. 7 through 10. As shown in Fig. 9, the third layer has a first receiving end 111 electrically connected to the receiving circuit 95. A first end of a first layer pattern 112 is connected to the first receiving end 111 through a first A via VA1. A second end of the pattern 112 is connected to a first end of a second layer pattern 113 through a second A via VA2. A second end of the pattern 113 is connected to a first end of a first layer pattern 115 through a third A via VA3, a pattern 114 and a fourth A via VA4. A second end of the pattern 115 is connected to a first end of a second layer pattern 116 through a fifth A via VA5. A second end of the pattern 116 is connected to a second receiving end 118 of a fourth layer, through a sixth A via VA6, a pattern 117 and a seventh A via VA7. The second receiving end 118 is connected to the receiving circuit 95. The receiving circuit 95 detects the potential difference between the first and second receiving ends 111 and 118 as a first output voltage signal v1.

The first receiving coil 110 is disposed in an area surrounded by the excitation coil 100 in the plan view of the substrate 91, as shown in Fig. 6A. In addition, when an excitation voltage is supplied to the excitation coil 100, the first receiving coil 110 is composed of a first portion that generates a voltage of a first polarity between the first receiving end 111 and the second receiving end 118 of the first receiving coil 110, and a second portion that generates a voltage of a second polarity that is opposite to the first polarity. n detail, as shown in Fig. 6B, in the plan view of the substrate 91, a circumferential center of the first receiving coil 110 is a first portion 110A with one turn, and both ends of the first portion 110A of the first receiving coil 110 are second portions 110B with the same number of turns (one turn) as the first portion 110A. As a result, pattern shapes of the first and second portions 110A, 110B on one side with respect to a circumferential central axis Lt of the first receiving coil 110 and pattern shapes of the first and second portions 110A, 110B on another side are symmetrical with respect to the above central axis Lt.

Next, the second receiving coil 120 is explained. The second receiving coil 120 is formed in layers 1 to 4, as shown in Figs. 7 through 10. As shown in Fig. 9, the third layer has a third receiving end 121 electrically connected to the receiving circuit 95. A first end of the second layer pattern 122 is connected to the third receiving end 121 through a first B via VB1. A second end of the pattern 122 is connected to a first end of a first layer pattern 123 through a second B via VB2. A second end of the pattern 123 is connected to a first end of a first layer pattern 125 through a third A via VA3, a pattern 124 and a fourth B via VB4. A second end of the pattern 125 is connected to a first end of a second layer pattern 126 through a fifth B via VB5. A second end of the pattern 126 is connected to a fourth receiving end 128 of a fourth layer, through a sixth via VB6, a pattern 127 and a seventh B via VB7. The fourth receiving end 128 is connected to the receiving circuit 95. The receiving circuit 95 detects the potential difference between the third and fourth receiving ends 121 and 128 as a second output voltage signal v2.

The second receiving coil 120 is disposed in an area surrounded by the excitation coil 100 in the plan view of the substrate 91, as shown in Fig. 6A. A circumferential length of the second receiving coil 120 is the same as a circumferential length of the first receiving coil 110. A radial length of the second receiving coil 120 is the same as a radial length of the first receiving coil 110.

In the plan view of the substrate 91, a circumferential end position of the second receiving coil 120 is the same as a circumferential end position of the first receiving coil 110. In addition, in the plan view of the substrate 91, a position of a radially outer end of the second receiving coil 120 and a position of a radially outer end of the first receiving coil 110 lie on concentric circles centered on the central axis LCo of the outer ring 51. Further, in the plan view of the substrate 91, a position of a radially inner end of the second receiving coil 120 and a position of a radially inner end of the first receiving coil 110 lie on concentric circles on the central axis line LCo.

As shown in Fig. 6C, the second receiving coil 120, like the first receiving coil 110, is composed of a first portion 120A and a second portion 120B. In the plan view of the substrate 91, one side of the second receiving coil 120 with respect to the circumferential central axis Lt is the first portion 120A and another side is the second portion 120B.

In the first and second receiving coils 110 and 120, a circumferential length from the central axis Lt to a circumferential end is the same as the circumferential length L1 of the shielding section 81 and cutout 82.

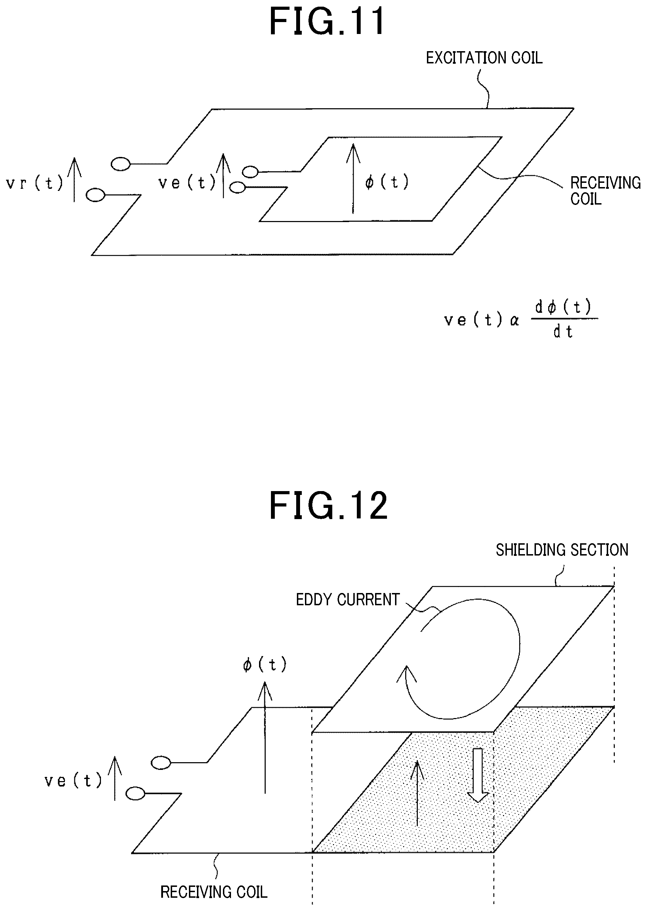

Next, the principle by which the detection unit 90 can detect the displacement and rotation angle is explained using Figs. 11 through 16.

First, an overview of the principle is explained in Figs. 11 and 12. As shown in Fig. 11, when a high-frequency excitation voltage vr(t) is supplied to the excitation coil, a high-frequency current flows in the excitation coil. The current generates a magnetic flux φ(t), and the flux φ(t) chains the receiving coil. A voltage ve(t) proportional to the time rate of change of the chain magnetic flux is induced at both ends of the receiving coil.

Fig. 12 shows aa state in which a part of the receiving coil is covered by the shielding section, which is a metal portion. Eddy currents flow in a portion of the shielding section that faces the receiving coil due to the chain magnetic flux caused by the energization of the excitation coil. This eddy current generates a magnetic flux in the direction of weakening the magnetic flux that generates the induced voltage in the receiving coil, which reduces the amplitude of the induced voltage in the receiving coil. In other words, the amplitude of the potential difference between the two ends of the receiving coil is proportional to an area of the receiving coil that is not covered by the shielding section.

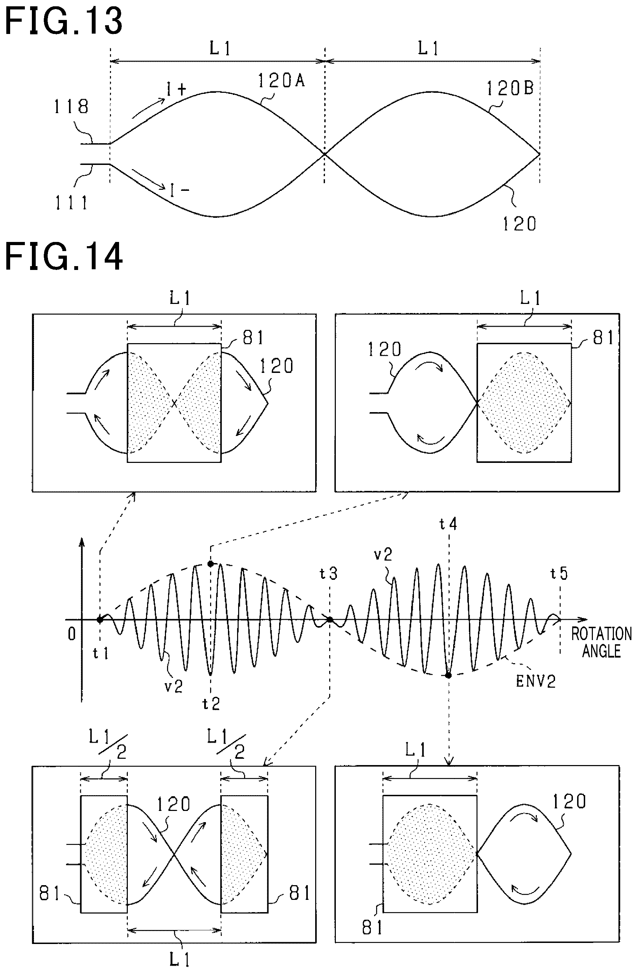

Based on the explanatory items in Figs. 11 and 12, the detection principle is explained using Figs. 13 and 14, with the second receiving coil 120 as an example. Figs. 13 and 14 show the second receiving coil 120 and shielding section 81 shown in Fig. 6, etc., with the circumferential direction in a straight line. Fig. 14 shows the relative positions of the second receiving coil 120 and the shielding section 81 and the transition of the second output voltage signal v2 of the second receiving coil 120.

In Figs. 13 and 14, a direction of current flow from the second receiving end 118 to the first receiving end 111 (I+) is referred to as a positive direction, and aa direction of current flow from the first receiving end 111 to the second receiving end 118 (I-) is referred to as a negative direction. In addition, in Figs. 13 and 14, the magnetic flux from the excitation coil 100 passes from the front side of the drawings to the rear side.

At time t1 in Fig. 14, a half of a center side of the first portion 120A and a half of a center side of the second portion 120B are covered by the shielding section 81. A voltage is induced in the first portion 120A to flow current in the positive direction, and a voltage is induced in the second portion 120B to flow current in the negative direction. As a result, the induced voltage generated in the first portion 120A cancels out the induced voltage generated in the second portion 120B, and the amplitude of the second output voltage signal v2 becomes zero.

At time t2, the second portion 120B among the first portion 120A and the second portion 120B is covered by the shielding section 81. In this case, a voltage is induced in the first portion 120A to flow current in the positive direction, and the induced voltage in the second portion 120B is zero. As a result, the amplitude of the second output voltage signal v2 becomes the maximum value on the first polarity (positive polarity) side. This maximum value becomes larger as the race section 80 approaches the second receiving coil 120.

At time t3, a half of an end side of the first portion 120A and a half of an end side of the second portion 120B are covered by the shielding section 81. A voltage is induced in the first portion 120A to flow current in the positive direction, and a voltage is induced in the second portion 120B to flow current in the negative direction. As a result, the induced voltage generated in the first portion 120A cancels out the induced voltage generated in the second portion 120B, and the amplitude of the second output voltage signal v2 becomes zero.

At time t4, the first portion 120A is covered by the shielding section 81 among the first portion 120A and the second portion 120B. In this case, a voltage is induced in the second portion 120B to flow current in the negative direction, and the induced voltage in the first portion 120A becomes zero. As a result, the amplitude of the second output voltage signal v2 becomes the maximum value on the second polarity (negative polarity) side, which is opposite to the first polarity. This maximum value becomes larger as the race section 80 approaches the second receiving coil 120.

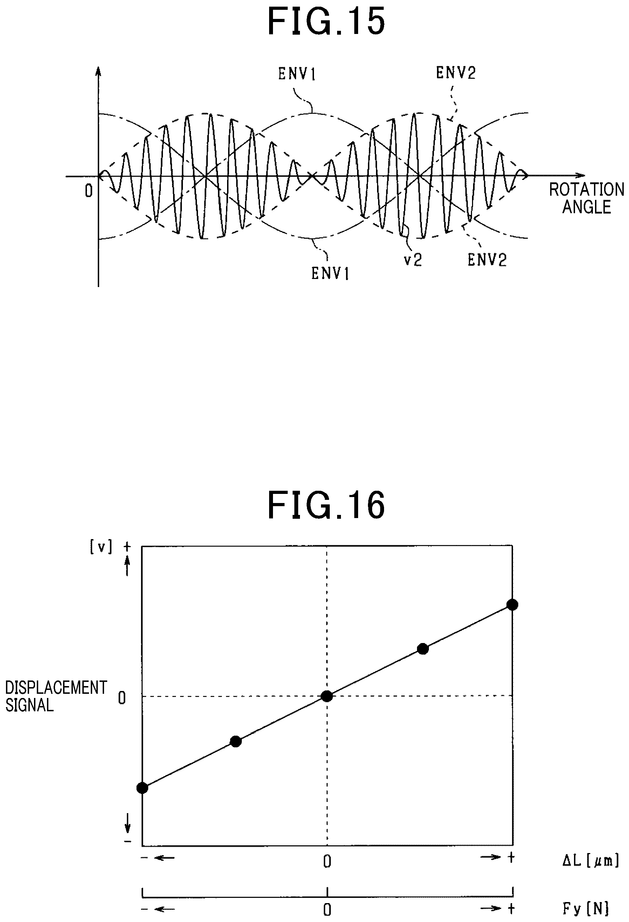

In the present embodiment, the shielding section 81 and the cutout 82 are formed alternately at the outer radial end of the race section 80. Therefore, during the rotation of the rotor 30, the amplitude of the second output voltage signal v2 of the second receiving coil 120 changes periodically, and the envelope of the second output voltage signal v2 (hereinafter referred to as the second envelope ENV2) becomes sinusoidal, as shown by the broken line in Figs. 14 and 15. For example, by setting the circumferential spacing of the magnetic pole positions of the magnet unit 32 in relation to the circumferential lengths of the shielding section 81 and cutout 82, it is possible to map the amplitude or envelope to the electrical angle θe.

In the present embodiment, when the excitation voltage is supplied to the excitation coil 100, the phase difference of the first output voltage signal v1 of the first receiving coil 110 to the second output voltage signal v2 of the second receiving coil 120 is 90 degrees. Therefore, the phase difference of the envelope of the first output voltage signal v1 (hereinafter referred to as the first envelope ENV1) relative to the second envelope ENV2 is also 90 degrees, as shown by the single-dotted line in Fig. 15.

As shown in Fig. 16, the amplitudes of the first and second envelopes ENV1 and ENV2 increase as the race section 80 approaches the first and second receiving coils 110, 120. Using the first envelope ENV1 as an example, the receiving circuit 95 outputs the amount of deviation of the amplitude of the actual first envelope ENV1 from the amplitude of the first envelope ES1 in a reference state to the processing section 70 as the first displacement signal. The reference state may be set arbitrarily. The reference state is, for example, a vehicle stopped, specifically, for example, a vehicle stopped on a level road surface. In the present embodiment, the receiving circuit 95 is configured so that the first displacement signal in the reference state is zero. The first displacement signal becomes positive polarity when an upper end of the race section 80 approaches the first and second receiving coils 110, 120 from its position in the reference state. The first displacement signal becomes larger in the positive direction when the race section 80 approaches the first and second receiving coils 110, 120 from its position in the reference state. On the other hand, the first displacement signal becomes negative polarity when the upper end of the race section 80 is away from the first and second receiving coils 110, 120 relative to its position in the reference state. The first displacement signal becomes larger in the negative direction when the upper end of the race section 80 is away from the first and second receiving coils 110, 120 relative to its position in the reference state. The first displacement signal is updated whenever the amplitude maximum on the positive polarity side and the amplitude maximum on the negative polarity side of the first envelope ENV1 appear. Note that the receiving circuit 95 outputs the amount of deviation of the amplitude of the actual second envelope ENV2 from the amplitude of the second envelope ES2 in the reference state to the processing section 70 as the second displacement signal. In the present embodiment, the receiving circuit 95 is configured so that the second displacement signal in the reference state is zero. Using the relationship explained above, the displacement calculation section 71, which constitutes the processing section 70, calculates the displacement ΔL in the axial direction of the race section 80 based on the first or second displacement signal. In detail, the displacement calculation section 71 calculates the displacement ΔL based on map or formula information in which the displacement signal and displacement ΔL are related.

As shown in Fig. 16, the larger the displacement ΔL, the larger the lateral force Fy. Using this relationship, the lateral force calculation section 72, which constitutes the processing section 70, calculates the lateral force Fy based on the calculated displacement ΔL and the map or formula information in which the displacement ΔL and the lateral force Fy are related. When the lateral force Fy is positive, the lateral force acts on the wheel in the direction outward in the vehicle width direction, and when the lateral force Fy is negative, the lateral force acts on the wheel in the direction inward in the vehicle width direction. Note that using the first displacement signal as an example, the lateral force calculation section 72 may calculate the lateral force Fy based on the first displacement signal and the map or formula information in which the first displacement signal and the lateral force Fy are related. The calculation of lateral force Fy based on the displacement signal and the map or formula information can be applied in the same way in each of the following embodiments.

The angle calculation section 73, which constitutes the processing section 70, calculates the rotation angle (e.g., electrical angle θe) of the rotor 30 based on at least one of the first output voltage signal v1 and the second output voltage signal v2.

Specifically, for example, the angle calculation section 73 can calculate the electrical angle θe based on the first or second envelope ENV1 or ENV2. This calculation method is based on the fact that the envelope is information about the transition of the amplitude of the output voltage signal and that the amplitude of the output voltage signal depends on the rotation angle.

In addition, for example, the angle calculation section 73 can calculate the electrical angle θe by using synchronous detection and a low-pass filter with the first output voltage signal v1, the second output voltage signal v2, and the excitation voltage vr as inputs. This calculation method is a digital tracking method and is disclosed, for example, in paragraphs 0028-0030 of the specification of JP 2015-073407 A.

According to the present embodiment detailed above, the following effects can be obtained.

The detection unit 90 is disposed in the stator base section 42, at a position away from the bearing 50 in the radial direction and opposite the radial end of the race section 80 in the axial direction. The portion of the race section 80 that faces the detection unit 90 in the axial direction is a portion that is radially outward from the bearing 50. Therefore, when a lateral force acts on the wheel, the axial displacement of the portion of the race section 80 that faces the detection unit 90 in the axial direction can be increased. As a result, the detection accuracy of displacement ΔL can be improved, which in turn improves the accuracy of calculating the lateral force Fy of the wheel that constitutes the under-spring of the vehicle.

Since the in-wheel motor 20 is configured as an outer rotor type, the radial end of the race section 80 can be disposed at a greater distance in the radial direction from the bearing 50. This can improve the detection accuracy of the displacement ΔL.

The first and second receiving coils 110 and 120 are disposed on the wheel 10 side in the axial direction from the coil end section comprising the stator winding 41. This makes it possible to suppress the influence of noise and the like that accompanies the passage of current through the stator winding 41 on the induced voltages in the first receiving coil 110 and the second receiving coil 120. As a result, the detection accuracy of the displacement ΔL and the rotation angle can be improved.

### <Modification of the First Embodiment>

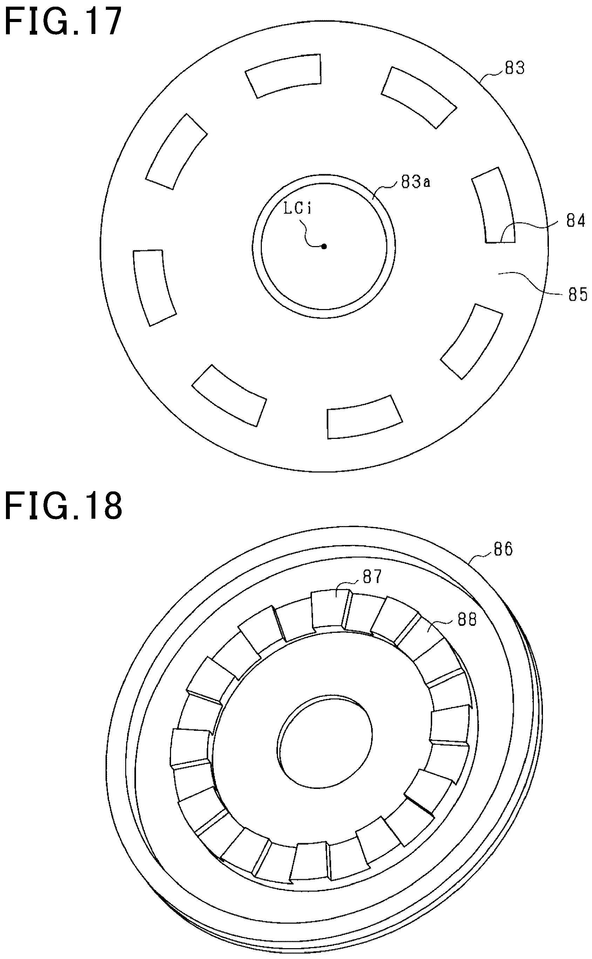

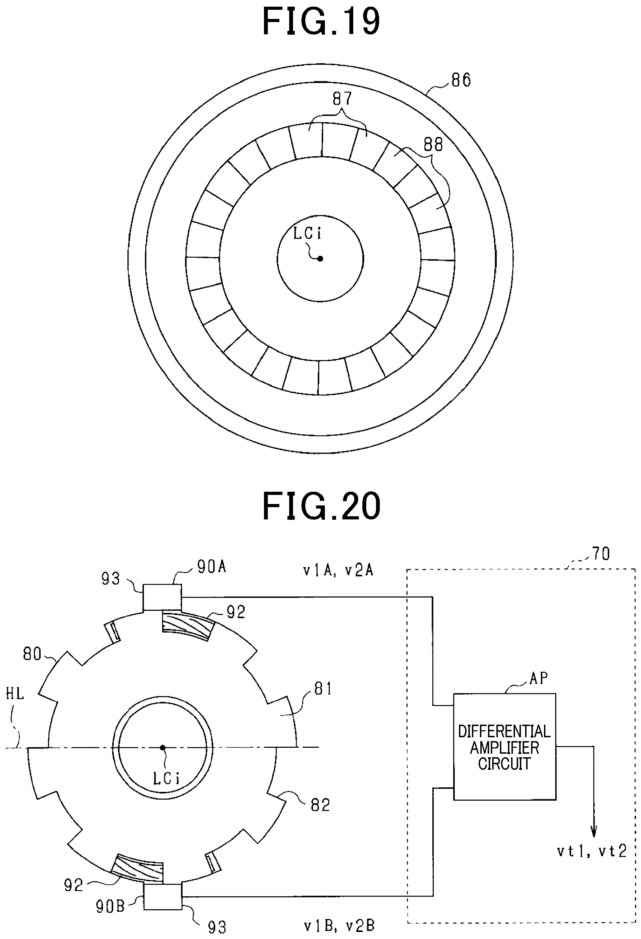

The race section is not limited to the configuration shown in Fig. 1, etc., but may, for example, have the following A and B configurations.
A: As shown in Fig. 17, the race section 83 has a shielding section 85 and an opening 84 through the race section alternating in the circumferential direction. Note that reference sign 83a in Fig. 17 corresponds to the bent section 80a shown in Figs. 1 and 2. In addition, the circumferential length of the opening 84 corresponds to the circumferential length of cutout 82 in Fig. 2.
B: As shown in Figs. 18 and 19, the race section 86 is provided by convex sections 87 protruding axially from the flat surface of the race section 86 in the axial direction of the inner ring 52 and concave sections 88 protruding axially from the flat surface of the race section 86 and concave in the axial direction of the inner ring 52 relative to the convex section 87, alternating in the circumferential direction. Note that the circumferential length of the convex section 87 corresponds to the circumferential length of the shielding section 81 in Fig. 2, and the circumferential length of the concave section 88 corresponds to the circumferential length of the cutout 82 in Fig. 2. The concave section 88 and convex section 87 change the axial distance between each receiving coil 110, 120 and the race section 86 during the rotation of the rotor 30. This change can be used to detect the displacement ΔL as in the first embodiment.

The detection unit 90 may be disposed opposite the lower end of the race section 80. The detection unit 90 may be disposed on the disk section 12 side with respect to the race section 80.

### <Second Embodiment>

The second embodiment is described below with reference to the drawings, focusing on the differences from the first embodiment. In the present embodiment, as shown in Fig. 20, a first detection unit 90A and a second detection unit 90B are provided as detection units. A coil section 92 (first and second receiving coils 110, 120) provided by the first detection unit 90A is disposed in the projecting section 45 of the stator base section 42, opposite the upper end of the race section 80 in the axial direction of the inner ring 52. A coil section 92 (first and second receiving coils 110, 120) provided by the second detection unit 90B is disposed in the projecting section 45 opposite the lower end of the race section 80 in the axial direction of the inner ring 52.

The substrates 91 of the first and second detection units 90A, 90B are disposed on the same side of the race section 80 in the axial direction. Note that in Fig. 20, HL indicates a horizontal axis line passing through the central axis line LCi of the inner ring 52.

During rotation of the rotor 30, each detection unit 90A, 90B is configured and disposed so that the phase difference between the first and second output voltage signals v1A, v2A of the first and second receiving coils 110, 120 provided in the first detection unit 90A and the first and second output voltage signals v1B, v2B of the first and second receiving coils 110, 120 provided in the second detection unit 90B is zero.

The processing section 70 is equipped with a differential amplifier circuit AP. The differential amplifier circuit AP amplifies the difference between the first output voltage signal v1A of the first detection unit 90A and the first output voltage signal v1B of the second detection unit 90B and outputs it as the first amplified signal vt1. In addition, the differential amplifier circuit AP amplifies the difference between the second output voltage signal v2A of the first detection unit 90A and the second output voltage signal v2B of the second detection unit 90B and outputs it as the second amplified signal vt2. In an angle calculation section 73, instead of the first and second output voltage signals v1 and v2, the first and second amplified signals vt1 and vt2 are used to calculate the rotation angle. Note that the rotation angle may be calculated based on the first and second output voltage signals v1A, v2A of the first detection unit 90A or the first and second output voltage signals v1B, v2B of the second detection unit 90B. In addition, the displacement calculation section 71 calculates the amplitude of the envelope of the first amplified signal vt1 as the first displacement signal and the amplitude of the envelope of the second amplified signal vt2 as the second displacement signal. Because of the differential amplification, the amplitude change of the output voltage signal of each receiving coil 110, 120 with respect to the change in the axial displacement of the coil section 92 and the race section 80 can be increased. In other words, the sensitivity of the inductive sensor can be increased. This can improve the detection accuracy of the displacement ΔL.

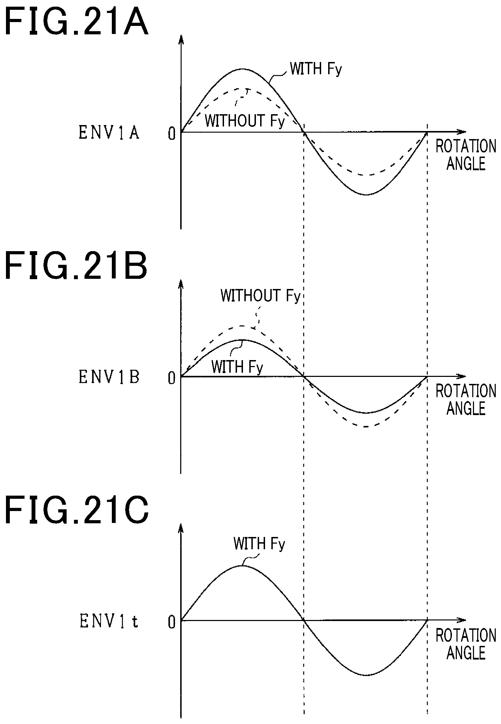

The output signals of the differential amplifier circuit AP and other circuits are explained below using Fig. 21. Fig. 21A shows the envelope ENV1A of the first output voltage signal v1A in the first detection unit 90A, and Fig. 21B shows the envelope ENV1B of the first output voltage signal v1B in the second detection unit 90B. Fig. 21C shows the envelope ENV1t of the first amplified signal vt1 (= v1A-v1B).

The phase difference between the first output voltage signal v1A of the first detection unit 90A and the first output voltage signal v1B of the second detection unit 90B is zero. In addition, when no lateral force is acting on the wheel, the amplitude of the first output voltage signal v1A of the first detection unit 90A and the amplitude of the first output voltage signal v1B of the second detection unit 90B becomes the same. As a result, the amplitudes of each envelope ENV1A and ENV1B become the same, and the first amplified signal vt1 and the first displacement signal become zero, as shown by the dashed lines in the drawings.

On the other hand, when the lateral force acting on the wheel facing outward in the width direction, the inner ring 52 tilts with respect to the outer ring 51 so that the upper end of the race section 80 approaches the stator base section 42 side and the lower end approaches the wheel 10 side. This increases the amplitude of the first output voltage signal v1A of the first detection unit 90A and decreases the amplitude of the first output voltage signal v1B of the second detection unit 90B. As a result, the amplitude of the envelope ENV1A of the first output voltage signal v1A in the first detection unit 90A increases and the amplitude of the envelope ENV1B of the first output voltage signal v1B in the second detection unit 90B decreases as shown by the solid line in the drawings. Therefore, the amplitude of the envelope ENV1t of the first amplified signal vt1 increases. From the above, the displacement calculation section 71, which constitutes the processing section 70, calculates the amplitudes of the envelopes of the first and second amplified signals vt1 and vt2 as the first and second displacement signals, and calculates the displacement ΔL in the axial direction of the race section 80 based on one of the calculated first and second displacement signals.

The coil section 92 of the first detection unit 90A is disposed opposite the upper end of the race section 80, and the coil section 92 of the second detection unit 90B is disposed opposite the lower end of the race section 80. When lateral forces act on the wheel, the axial displacement of the upper and lower ends of the race section 80 increases. This arrangement allows the amplitude of the output voltage signal of each receiving coil 110, 120 of each detection unit 90A, 90B to be increased, thus improving the detection accuracy of the displacement ΔL.

The substrates 91 of the first and second detection units 90A and 90B are disposed on the same side of the race section 80 in the axial direction. When the direction of the lateral force acting on the wheel is toward the outside of the vehicle width direction, the inner ring 52 tilts with respect to the outer ring 51 so that the upper end of the race section 80 is closer to the stator base section 42 and the lower end is closer to the wheel 10. In this case, the amplitude of the output voltage signal of each of the receiving coils 110, 120 of the first detection unit 90A increases and the amplitude of the output voltage signal of each of the receiving coils 110, 120 of the second detection unit 90B decreases. In other words, a decrease in the amplitude of the output voltage signal on the 90B side of the second detection unit can be compensated for by an increase in the amplitude of the output voltage signal on the side of the first detection unit 90A.

On the other hand, when the direction of the lateral force acting on the wheel is toward the inside of the vehicle width direction, the inner ring 52 tilts with respect to the outer ring 51 so that the upper end of the race section 80 approaches the wheel 10 side and the lower end approaches the stator base section 42. In this case, the amplitude of the output voltage signal of each of the receiving coils 110, 120 of the first detection unit 90A decreases and the amplitude of the output voltage signal of each of the receiving coils 110, 120 of the second detection unit 90B increases. In other words, a decrease in the amplitude of the output voltage signal on the 90A side of the first detection unit can be compensated for by an increase in the amplitude of the output voltage signal on the side of the second detection unit 90B.

According to this configuration in which the substrates 91 of the first and second detection units 90A and 90B are disposed on the same side with respect to the race section 80, the amplitude of the output voltage signal can be maintained as much as possible regardless of whether the direction of the lateral force acting on the wheel is inside or outside the vehicle width direction. As a result, the detection accuracy of the displacement ΔL can be maintained.

### <Modification of the Second Embodiment>

The second detection unit 90B may be disposed on the opposite side of the race section 80 from the first detection unit 90A.

### <Third Embodiment>

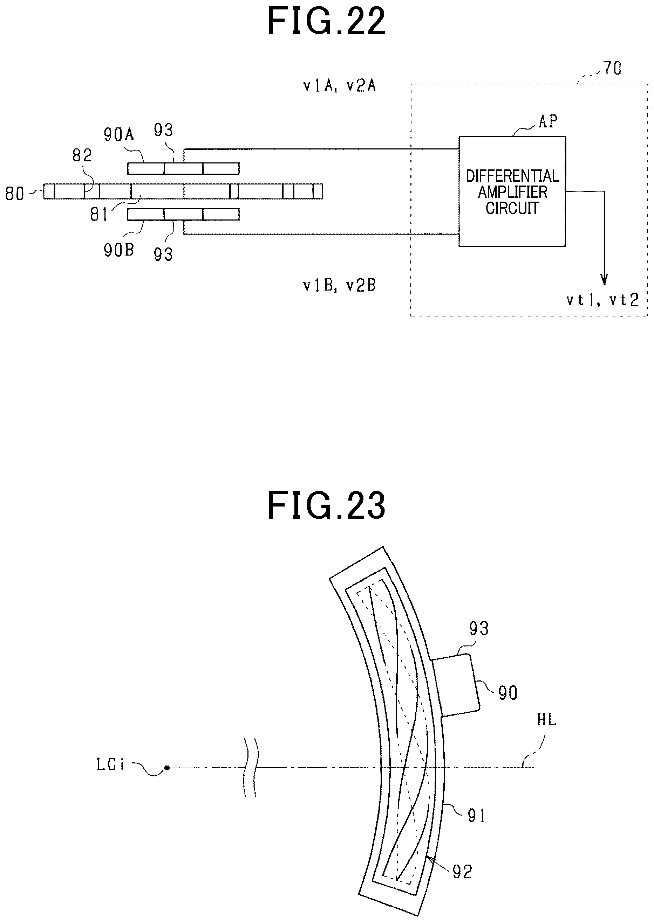

The third embodiment is described below with reference to the drawings, focusing on the differences from the second embodiment. In the present embodiment, as shown in Fig. 22, the substrate 91 and coil section 92 provided by the second detection unit 90B are disposed on the opposite side of the central axis line LCo of the outer ring 51 from the substrate 91 and coil section 92 provided by the first detection unit 90A across the race section 80. In other words, the first and second detection units 90A and 90B are disposed opposite the upper end of the race section 80. Fig. 22 shows the race section 80 and each of the detection units 90A, 90B viewed from above the race section 80. In this embodiment, too, during rotation of the rotor 30, each detection unit 90A, 90B is configured and disposed so that the phase difference between the first and second output voltage signals v1A, v2A of the first and second receiving coils 110, 120 provided in the first detection unit 90A and the first and second output voltage signals v1B, v2B of the first and second receiving coils 110, 120 provided in the second detection unit 90B is zero. The angle calculation section 73 calculates the rotation angle as in the second embodiment, and the displacement calculation section 71 calculates the first and second displacement signals as in the second embodiment.

According to the present embodiment described above, the same effects as in the second embodiment can be achieved.

### <Modification of the Third Embodiment>

The first and second detection units 90A and 90B may be disposed opposite the lower end of the race section 80.

### <Fourth Embodiment>

The fourth embodiment is described below with reference to the drawings, focusing on the differences from the first embodiment. In the present embodiment, as shown in Fig. 23, the coil section 92 (first and second receiving coils 110, 120) straddles a horizontal axis HL passing through the center of rotation of the race section 80 (central axis of the inner ring 52 LCi). This results in the circumferential center of the first and second receiving coils 110, 120 being shifted upward with respect to the horizontal axis HL. This placement method is explained below, using the second receiving coil 120 as an example.

As described above, the relative position of the second receiving coil 120 and the shielding section 81 causes the induced voltage generated at the first portion 120A of the second receiving coil 120 and the induced voltage generated at the second portion 120B to cancel each other out. In this case, the second output voltage signal v2 of the second receiving coil 120 becomes zero. As the canceling condition is resolved, the amplitude of the second output voltage signal v2 increases. However, the axial displacement of the race section 80 near the horizontal axis line HL is smaller than the radial end of the race section 80. Therefore, the amplitude of the second output voltage signal v2 of the second receiving coil 120 is likely to be smaller in a configuration where the detection unit 90 straddles the horizontal axis HL.

Therefore, in the present embodiment, the circumferential center of the first and second receiving coils 110, 120 is shifted upward with respect to the horizontal axis HL. This allows the axial displacement between the second receiving coil 120 and the race section 80 to be as large as possible when the inner ring 52 is inclined with respect to the outer ring 51. As a result, the detection accuracy of the displacement ΔL can be improved.

### <Fifth Embodiment>

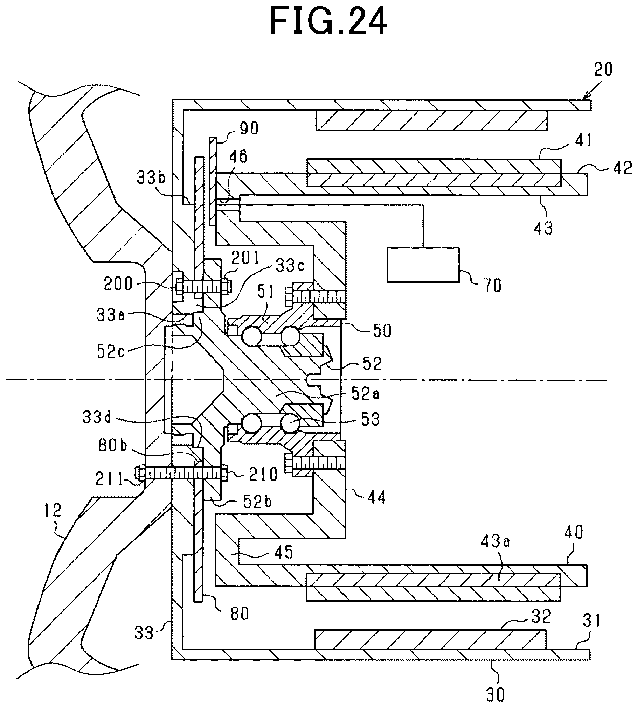

The fifth embodiment is described below with reference to the drawings, focusing on the differences from the first embodiment. In the present embodiment, as shown in Fig. 24, a configuration is adopted that can reduce the coaxiality of the rotor 30, the race section 80, and the bearing 50. In Fig. 24, the same or corresponding configurations as those shown in Fig. 1, etc. above are given with the same reference signs for convenience. The race section 80 in this embodiment does not have a bent section 80a.

A through hole 33a is formed in the radial center of the flat plate section 33 that constitutes the rotor 30. An inner side of the flat plate section 33 in the vehicle width direction has a circular step section 33b extending from an inner end in the radial direction toward an outer side in the radial direction. A inside surface of the step section 33b in the vehicle width direction is flat. A circular locating section 33c protruding inward in the vehicle width direction is formed at an inner radial end of the step section 33b.

A through hole 80b is formed in the center of the race section 80 in the radial direction. With the flat surface of the race section 80 in contact with the flat surface of the step section 33b, the locating section 33c is fitted into the through hole 80b of the race section 80. As a result, the central axis of rotation of the rotor 30 and the axis of rotation of the race section 80 are coaxial.

A circular bearing-side step section 52c protruding outward in the vehicle width direction is formed at the radially inner end of the flange section 52b of the inner ring 52. A circular concave section 33d that is concave outward in the vehicle width direction is formed in a portion of the flat plate section 33 that is radially inward from the locating section 33c. The bearing-side step section 52c is fitted into the concave section 33d, so that the central axis of the inner ring 52, the central axis of rotation of the rotor 30, and the central axis of rotation of the race section 80 are coaxial. In particular, in the present embodiment, the flat surface of the outer side of the flange section 52b in the vehicle width direction is in contact with the flat surface of the race section 80 and the locating section 33c. This allows the coaxiality of the central axis of rotation of the rotor 30, the central axis of rotation of the race section 80, and the central axis of the inner ring 52 to be suitably reduced.

The flat plate section 33, race section 80, and flange section 52b have first through holes that pass through in the axial direction. The first through holes are formed in a plurality of rows aligned in the circumferential direction (e.g., aligned at equal intervals in the circumferential direction). A bolt 200 is inserted into each first through hole. The bolt 200 is inserted into the first through hole with a head of the bolt 200 facing outward in the vehicle width direction and a shaft of the bolt 200 facing inward in the vehicle width direction. In this inserted state, a male thread at an end of the shaft is screwed into a female thread of a nut 201. Thereby, the overlapped flat plate section 33, the race section 80 and the flange section 52b are sandwiched by the head of the bolt 200 and the nut 201. As a result, the rotor 30, the race section 80, and the bearing 50 are integrated.

The flat plate section 33, the race section 80, the flange section 52b, and the disk section 12 have second through holes that pass through in the axial direction. The second through holes are formed in a plurality of positions shifted from the positions at which the first through holes are formed, and are aligned in the circumferential direction (e.g., aligned at equal intervals in the circumferential direction). A bolt 210 is inserted into each second through-hole. The bolt 210 is inserted into the second through-hole with a head of the bolt 210 facing inward in the vehicle width direction and a shaft of the bolt 210 facing outward in the vehicle width direction. In this inserted state, a male thread of the bolt 210 is screwed into a female thread of a nut 211. overlapped flat plate section 33, the flange section 52b, the race section 80 and the disk section 12 are sandwiched between the head of the bolt 210 and the nut 211. As a result, the rotor 30, the bearing 50, the race section 80, and the wheel 10 are integrated.

Next, a method for manufacturing a drive wheel will be explained. In the present manufacturing method, after assembling a motor assembly with the race section 80, the motor assembly is assembled to the wheel 10.

With the flat surface of the race section 80 in contact with the flat surface of the step section 33b, the locating section 33c is fitted into the through hole 80b of the race section 80. The race section 80 is then sandwiched between the step section 33b and the flange section 52b, while the bearing-side step section 52c is fitted into the concave section 33d.

With the flat plate section 33, the race section 80, and the flange section 52b overlapping, insert the bolt 200 into each first through hole with the head of the bolt 200 facing outward from the rotor 30. Then, the female thread of the nut 201 is hen screwed onto the male thread of the bolt 200. As a result, the overlapped flat plate section 33, the race section 80 and the flange section 52b are sandwiched by the head of the bolt 200 and the nut 201. This results in the motor assembly in which the rotor 30, the race section 80, and the bearing 50 are integrated into a single unit. Here, since the flat surface of the race section 80 is in contact with the flat surface of the step section 33b, warpage of the race section 80 when the nut 201 is screwed onto the bolt 200 can be suppressed from occurring.

With the motor assembly and the disk section 12 overlapping, insert the bolts 210 into each second through hole with the head of the bolt 210 facing toward the stator base section 42. Then, screw the female thread of the nut 211 onto the male thread of bolt 210. This integrates the motor assembly and the wheel 10.

According to the embodiment described above, it is possible to provide a drive wheel with a smaller coaxiality of the rotor 30, the race section 80, and the bearing 50. This can increase the accuracy of detection by the detection unit 90.

### <Sixth Embodiment>

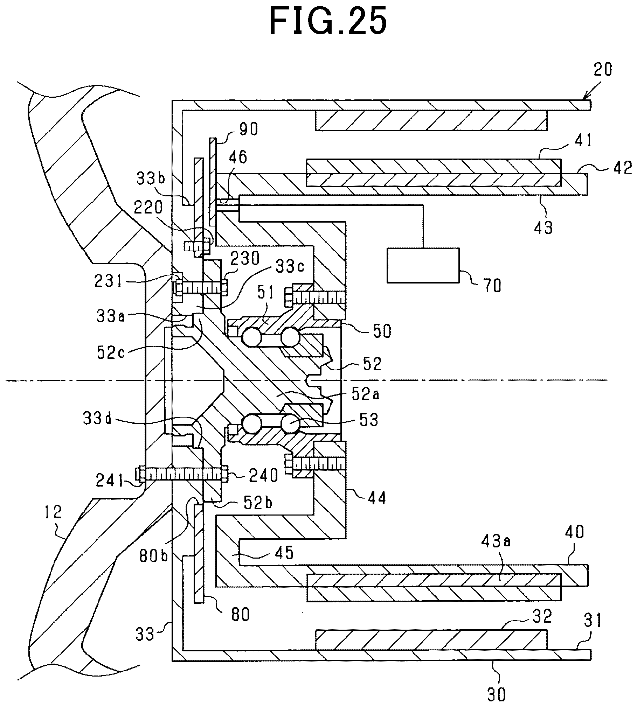

The sixth embodiment is described below with reference to the drawings, focusing on the differences from the fifth embodiment. In the present embodiment, as shown in Fig. 25, the race section 80 is fixed to the rotor 30, not the inner ring 52. Note that in Fig. 25, the same or corresponding configurations as those shown in Fig. 24, etc. above are given with the same reference signs for convenience.

With the flat surface of the race section 80 in contact with the flat surface of the step section 33b, the locating section 33c is fitted into the through hole 80b of the race section 80. In this state, the bolts 220 secure the race section 80 and the step section 33b.

The flat plate section 33 and the flange section 52b have first through holes that pass through the flat plate section 33 and the flange section 52b in the axial direction. The first through holes are formed in a plurality of rows aligned in the circumferential direction (e.g., aligned at equal intervals in the circumferential direction). A bolt 230 is inserted through each first through hole. The bolt 230 is inserted into the first through hole with a head of the bolt 230 facing inward in the vehicle width direction and a shaft of the bolt 230 facing outward in the vehicle width direction. In this inserted state, a male thread of bolt 230 is screwed into a female thread of a nut 231. Thereby, the overlapped flat plate section 33 and the flange section 52b are sandwiched by the head of the bolt 230 and the nut 231. As a result, the rotor 30, the race section 80, the and bearing 50 are integrated.

The flat plate section 33, the flange section 52b, and the disk section 12 have second through holes that pass through the flat plate section 33, the flange section 52b, and the disk section 12 in the axial direction. The second through holes are formed in a plurality of positions shifted in the radial direction from the positions at which the first through holes are formed, and are aligned in the circumferential direction (e.g., aligned at equal intervals in the circumferential direction). A bolt 240 is inserted into each second through hole. The bolt 240 is inserted into the second through hole with a head of the bolt 240 facing inward in the vehicle width direction and a shaft of the bolt 240 facing outward in the vehicle width direction. In this inserted state, a male thread of bolt 240 is screwed into a female thread of a nut 241. Thereby, the overlapped flat plate section 33, the flange section 52b and the disk section 12 are sandwiched between the head of the bolt 240 and the nut 241. As a result, the rotor 30 and the wheel 10 are integrated.

### <Other Embodiments>

Each of the above embodiments may be implemented with the following modifications.

In the fourth embodiment, the circumferential center of the first and second receiving coils 110, 120 may be shifted downward with respect to the horizontal axis HL.

The cutouts 82 in Fig. 2 or the openings 84 in Fig. 17 may be provided by non-metallic parts such as a synthetic resin. In this case, a configuration in which metal and non-metal portions alternate in the circumferential direction in the race section can be realized, and the rotation angle can be detected in the same manner as in the first embodiment, etc.

The in-wheel motor 20 shown in Fig. 1 does not have to have a race section 80. In this case, for example, a shielding section and an opening may be formed alternately in the circumferential direction, or a concave section and a convex section may be formed alternately in the circumferential direction, in the flat plate section 33 of the in-wheel motor 20 that is opposite the coil section 92 in the axial direction. In this case, the flat plate section 33 corresponds to the rotating section for detection.

The receiving coil formed on the substrate 91 may be either the first receiving coil 110 or the second receiving coil 120.

The sensor for detecting displacement is not limited to eddy current type sensors, but can also be a sensor that detects displacement with a laser beam, for example.

The bearing is not limited to one in which the outer ring 51 is fixed to the stator base section 42 and the inner ring 52 is fixed to the wheel 10, but may also be one in which the outer ring is fixed to the wheel 10 and the inner ring is fixed to the stator base section 42. In this case, the inner ring corresponds to the first bearing member and the outer ring corresponds to the second bearing member.

The motor is not limited to those accommodated in the wheels, but can be, for example, an on-board motor in the vehicle body. Moreover, the motor is not limited to an outer rotor type, but may be an inner rotor type.

A control section and methods described in the present disclosure may be realized by a dedicated computer provided by configuring a processor and memory programmed to perform one or more functions embodied by the computer program. Alternatively, the control section and methods described in the present disclosure may be realized by a dedicated computer provided by configuring the processor with one or more dedicated hardware logic circuits. Alternatively, the control section and methods described in the present disclosure may be realized by one or more dedicated computers composed of a processor and memory programmed to perform one or more functions, in combination with a processor composed of one or more hardware logic circuits. **In** addition, the computer program may also be stored in a computer-readable, non-transitory tangible storage media as instructions to be executed by a computer.

## Claims

1. A detection device for vehicles comprising:
a base section (42) fixable to a body of a vehicle; and
a bearing (50) having an outer ring member (51), an inner ring member (52), and rolling elements (53) disposed between the outer ring member (51) and the inner ring member (52), the bearing (50) being configured to rotatably support a wheel (10) of the vehicle against the base section (42); wherein
a first bearing member (52) of the outer ring member (51) and the inner ring member (52) is fixable to the wheel (10), and a second bearing member (51) of the outer ring member (51) and the inner ring member (52) is fixed to the base section (42);
the detection device for vehicles further comprising:
a disk-shaped rotating section for detection (80, 83, 86) that is disposed to rotate integrally with the first bearing member (52); and
a displacement detection section (90, 90A, 90B) that is disposed in a non-contact state with the rotating section for detection (80, 83, 86) at a position of the base section (42) that is distant from the bearing (50) in the radial direction and opposite to the rotating section for detection (80, 83, 86) in the axial direction of the bearing (50) and that outputs a signal in response to an axial displacement of the rotating section for detection (80, 83, 86),
**characterized in that**
the disk-shaped rotating section for detection (80, 83, 86) extends radially outward of the bearing (50) with respect to the first bearing member (52),
a detection target section (81, 82, 84, 85, 87, 88) having an annular shape and extending in a circumferential direction of the bearing (50) is formed at a position of the rotating section for detection (80, 83, 86) away from the bearing (50) in the radial direction,
the displacement detection section (90, 90A, 90B) includes:
a planar receiving coil (110, 120) that is fixed to the base section (42) and disposed at a position opposite to the detection target section (81, 82, 84, 85, 87, 88) in the axial direction and extending in a direction that intersects the axial direction, and
an excitation coil (100) to which an AC excitation voltage is supplied, wherein
the receiving coil (110, 120) is voltage induced when the excitation voltage is supplied to the excitation coil (100), and
a processing section (70) is provided to calculate the axial displacement of the rotating section for detection (80, 83, 86) based on an output voltage signal of the receiving coil (110, 120).

2. The detection device for vehicles according to claim 1, wherein
the detection target section (81, 82, 84, 85, 87, 88) is configured to have:
a configuration in which a metal portion (81) and a portion (82) pierced in the axial direction are disposed alternately in the circumferential direction,
a configuration in which a concave section (88) concaving in the axial direction and a convex section (87) protruding in the axial direction relative to the concave section (88) are disposed alternately in the circumferential direction, or
a configuration in which metallic and non-metallic portions are disposed alternately in the circumferential direction, wherein
the processing section (70) further calculates a rotation angle of the rotating section for detection (80, 83, 86) based on the output voltage signal of the receiving coil (110, 120).

3. The detection device for vehicles according to claim 2, wherein
the receiving coil (110, 120) includes:
a first receiving coil (110) from which voltage is induced when the excitation voltage is supplied to the excitation coil (100), and
a second receiving coil (120) in which a voltage out of phase with the induced voltage of the first receiving coil (110) is induced when the excitation voltage is supplied to the excitation coil (100), wherein
the processing section (70) calculates the rotation angle based on the output voltage signals of the first and second receiving coils (110 and 120).

4. The detection device for vehicles according to any one of claims 1 to 3, wherein
the displacement detection section (90, 90A, 90B) includes a first displacement detection section (90A) and a second displacement detection section (90B),
the receiving coil (110, 120) provided by the first displacement detection section (90A) is disposed in the axial direction opposite an upper end of the rotating section for detection (80, 83, 86), and
the receiving coil (110, 120) provided by the second displacement detection section (90B) is disposed opposite a lower end of the rotating section for detection (80, 83, 86) in the axial direction.

5. The detection device for vehicles according to any one of claims 1 to 3, wherein
the displacement detection section (90, 90A, 90B) includes a first displacement detection section (90A) and a second displacement detection section (90B),
the receiving coil (110, 120) provided by the first displacement detection section (90A) is disposed opposite an upper or lower end of the rotating section for detection (80, 83, 86) in the axial direction, and
the receiving coil (110, 120) provided by the second displacement detection section (90B) is disposed on an opposite side of the receiving coil (110, 120) provided by the first displacement detection section across the rotating section for detection (80, 83, 86) in the axial direction.

6. The detection device for vehicles according to claim 4 or 5, wherein
the first and second displacement detection sections (90A and 90B) are configured so that a phase of the output voltage signal of the receiving coil (110, 120) provided by the first displacement detection section (90A) and a phase of the output voltage signal of the receiving coil (110, 120) provided by the second displacement detection section (90B) are the same,
the detection device further includes an amplifier (AP) that amplifies and outputs the difference between the output voltage signal of the receiving coil (110, 120) provided by the first displacement detection section (90A) and the output voltage signal of the receiving coil (110, 120) provided by the second displacement detection section (90B), and
the processing section (70) calculates the displacement based on the output voltage signal of the amplifier (AP).

7. The detection device for vehicles according to any one of claims 1 to 3, wherein
the receiving coil (110, 120) includes:
a first portion (110A, 120A) that generates a first polarity voltage at both ends of the receiving coil (110, 120) when the excitation voltage is supplied to the excitation coil (100), and
a second portion (110B, 120B) that generates a second polarity voltage opposite to the first polarity at both ends of the receiving coil (110, 120) when the excitation voltage is supplied to the excitation coil (100),
the receiving coil (110, 120) is configured to have:
a configuration in which, in a plan view of the receiving coil (110, 120), the first portion (110A, 120A) is disposed on one side and the second portion (110B, 120B) is disposed on another side with respect to a circumferential center of the receiving coil (110, 120), and the first portion (110A, 120A) and the second portion (110B, 120B) are aligned in the circumferential direction, or
a configuration in which, in a plan view of the receiving coil (110, 120), the first portion (110A, 120A) and the second portion (110B, 110B) on one side and the first portion (110A, 120A) and the second portion (110B, 120B) on another side of the receiving coil (110, 120) are symmetrical with respect to the center in circumferential direction, wherein
the receiving coil (110, 120) straddles a horizontal axis line passing through a central axis of rotation of the rotating section for detection (80, 83, 86), and
the circumferential center of the receiving coil (110, 120) is displaced vertically from the horizontal axis line.

8. The detection device for vehicles according to any one of claims 1 to 7, wherein
the processing section (70) calculates a lateral force acting on the wheel (10) based on the calculated displacement.

## Patentansprüche

1. Erfassungsvorrichtung für Fahrzeuge, die Folgendes aufweist:
einen Basisbereich (42), der an einem Körper eines Fahrzeugs befestigbar ist; und
ein Lager (50) mit einem Außenringbauteil (51), einem Innenringbauteil (52) und Wälzelementen (53), die zwischen dem Außenringbauteil (51) und dem Innenringbauteil (52) angeordnet sind, wobei das Lager (50) gestaltet ist, um ein Rad (10) des Fahrzeugs gegen den Basisbereich (42) drehbar zu stützen; wobei
ein erstes Lagerbauteil (52) des Außenringbauteils (51) und des Innenringbauteils (52) an dem Rad (10) befestigbar ist, und ein zweites Lagerbauteil (51) des Außenringbauteils (51) und des Innenringbauteils (52) an dem Basisbereich (42) befestigt ist;
die Erfassungsvorrichtung für Fahrzeuge des Weiteren Folgendes aufweist:
einen scheibenförmigen Drehbereich zur Erfassung (80, 83, 86), der angeordnet ist, um sich einstückig mit dem ersten Lagerbauteil (52) zu drehen; und
einen Verschiebungserfassungsbereich (90, 90A, 90B), der in einem Nichtkontaktzustand mit dem Drehbereich zur Erfassung (80, 83, 86) an einer Position des Basisbereichs (42), die von dem Lager (50) in der radialen Richtung und entgegengesetzt zu dem Drehbereich zur Erfassung (80, 83, 86) in der axialen Richtung des Lagers (50) entfernt ist, angeordnet ist und der ein Signal in Erwiderung auf eine axiale Verschiebung des Drehbereichs zur Erfassung (80, 83, 86) ausgibt,
**dadurch gekennzeichnet, dass**
der scheibenförmige Drehbereich zur Erfassung (80, 83, 86) sich radial nach außen des Lagers (50) in Bezug auf das erste Lagerbauteil (52) erstreckt,
ein Erfassungszielbereich (81, 82, 84, 85, 87, 88), der eine Ringform hat und sich in einer Umfangsrichtung des Lagers (50) erstreckt, an einer Position des Drehbereichs zur Erfassung (80, 83, 86) weg von dem Lager (50) in der radialen Richtung ausgebildet ist,
der Verschiebungserfassungsbereich (90, 90A, 90B) Folgendes aufweist:
eine ebene Erhaltungsspule (110, 120), die an dem Basisbereich (42) befestigt ist und an einer Position entgegengesetzt zu dem Erfassungszielbereich (81, 82, 84, 85, 87, 88) in der axialen Richtung angeordnet ist und sich in einer Richtung erstreckt, die die axiale Richtung schneidet, und
eine Erregungsspule (100), an der eine AC-Erregungsspannung angelegt wird, wobei
die Erhaltungsspule (110, 120) eine Spannung induziert, wenn die Erregungsspannung an der Erregungsspule (100) angelegt wird, und
ein Verarbeitungsbereich (70) vorgesehen ist, um die axiale Verschiebung des Drehbereichs zur Erfassung (80, 83, 86) auf der Grundlage eines Ausgabespannungssignals der Erhaltungsspule (110, 120) zu berechnen.

2. Erfassungsvorrichtung für Fahrzeuge nach Anspruch 1, wobei
der Erfassungszielbereich (81, 82, 84, 85, 87, 88) gestaltet ist, um:
eine Gestaltung zu haben, in der ein Metallabschnitt (81) und ein Abschnitt (82), der in der axialen Richtung durchgetreten ist, abwechselnd in der Umfangsrichtung angeordnet sind,
eine Gestaltung zu haben, in der ein konkaver Bereich (88), der in der axialen Richtung konkav ist, und ein konvexer Bereich (87), der in der axialen Richtung relativ zu dem konkaven Bereich (88) vorsteht, abwechselnd in der Umfangsrichtung angeordnet sind, oder
eine Gestaltung zu haben, in der metallische und nicht metallische Abschnitte abwechselnd in der Umfangsrichtung angeordnet sind, wobei
der Verarbeitungsbereich (70) des Weiteren einen Drehwinkel des Drehbereichs zur Erfassung (80, 83, 86) auf der Grundlage des Ausgabespannungssignals der Erhaltungsspule (110, 120) berechnet.

3. Erfassungsvorrichtung für Fahrzeuge nach Anspruch 2, wobei die Erhaltungsspule (110, 120) Folgendes aufweist:
eine erste Erhaltungsspule (110), von der eine Spannung induziert wird, wenn die Erregungsspannung an die Erregungsspule (100) angelegt wird, und
eine zweite Erhaltungsspule (120), in der eine zu der induzierten Spannung der ersten Erhaltungsspule (110) phasenverschobenen Spannung induziert wird, wenn die Erregungsspannung an die Erregungsspule (100) angelegt wird, wobei
der Verarbeitungsbereich (70) den Drehwinkel auf der Grundlage der Ausgabespannungssignale der ersten und zweiten Erhaltungsspulen (110 und 120) berechnet.

4. Erfassungsvorrichtung für Fahrzeuge nach einem der Ansprüche 1 bis 3, wobei
der Verschiebungserfassungsbereich (90, 90A, 90B) einen ersten Verschiebungserfassungsbereich (90A) und einen zweitem Verschiebungserfassungsbereich (90B) aufweist,
die Erhaltungsspule (110, 120), die durch den ersten Verschiebungserfassungsbereich (90A) vorgesehen ist, in der axialen Richtung entgegengesetzt zu einem oberen Ende des Drehbereichs zur Erfassung (80, 83, 86) angeordnet ist, und
die Erhaltungsspule (110, 120), die durch den zweiten Verschiebungserfassungsbereich (90B) vorgesehen ist, entgegengesetzt zu einem unteren Ende des Drehbereichs zur Erfassung (80, 83, 86) in der axialen Richtung angeordnet ist.

5. Erfassungsvorrichtung für Fahrzeuge nach einem der Ansprüche 1 bis 3, wobei
der Verschiebungserfassungsbereich (90, 90A, 90B) einen ersten Verschiebungserfassungsbereich (90A) und einen zweiten Verschiebungserfassungsbereich (90B) aufweist,
die Erhaltungsspule (110, 120), die durch den ersten Verschiebungserfassungsbereich (90A) vorgesehen ist, entgegengesetzt zu einem oberen oder unteren Ende des Drehbereichs zur Erfassung (80, 83, 86) in der axialen Richtung angeordnet ist, und
die Erhaltungsspule (110, 120), die durch den zweiten Verschiebungserfassungsbereich (90B) vorgesehen ist, an einer entgegengesetzten Seite der Erhaltungsspule (110, 120), die durch den ersten Verschiebungserfassungsbereich vorgesehen ist, jenseits des Drehbereichs zur Erfassung (80, 83, 86) in der axialen Richtung angeordnet ist.

6. Erfassungsvorrichtung für Fahrzeuge nach Anspruch 4 oder 5, wobei
der erste und zweite Verschiebungserfassungsbereich (90A und 90B) so gestaltet sind, dass eine Phase des Ausgabespannungssignals der Erhaltungsspule (110, 120), die durch den ersten Verschiebungserfassungsbereich (90A) vorgesehen ist, und eine Phase des Ausgabespannungssignals der Erhaltungsspule (110, 120), die durch den zweiten Verschiebungserfassungsbereich (90B) vorgesehen ist, gleich sind,
die Erfassungsvorrichtung des Weiteren einen Verstärker (AP) aufweist, der die Differenz zwischen dem Ausgabespannungssignal der Erhaltungsspule (110, 120), die durch den ersten Verschiebungserfassungsbereich (90A) vorgesehen ist, und dem Ausgabespannungssignal der Erhaltungsspule (110, 120), die durch den zweiten Verschiebungserfassungsbereich (90B) vorgesehen ist, verstärkt und ausgibt, und
der Verarbeitungsbereich (70) die Verschiebung auf der Grundlage des Ausgabespannungssignals des Verstärkers (AP) berechnet.

7. Erfassungsvorrichtung für Fahrzeuge nach einem der Ansprüche 1 bis 3, wobei
die Erhaltungsspule (110, 120) Folgendes aufweist:
einen ersten Abschnitt (110A, 120A), der eine erste Polaritätsspannung an beiden Enden der Erhaltungsspule (110, 120) erzeugt, wenn die Erregungsspannung an der Erregungsspule (100) angelegt wird, und
einen zweiten Abschnitt (110B, 120B), der eine zweite Polaritätsspannung entgegengesetzt zu der ersten Polarität an beiden Enden der Erhaltungsspule (110, 120) erzeugt, wenn die Erregungsspannung an die Erregungsspule (100) angelegt wird,
die Erhaltungsspule (110, 120) gestaltet ist, um:
eine Gestaltung zu haben, in der in einer Draufsicht der Erhaltungsspule (110, 120) der erste Abschnitt (110A, 120A) an einer Seite angeordnet ist und der zweite Abschnitt (110B, 120B) an einer anderen Seite in Bezug auf eine Umfangsmitte der Erhaltungsspule (110, 120) angeordnet ist, und der erste Abschnitt (110A, 120A) und der zweite Abschnitt (110B, 120B) in der Umfangsrichtung ausgerichtet sind, oder
eine Gestaltung zu haben, in der in einer Draufsicht der Erhaltungsspule (110, 120) der erste Abschnitt (110A, 120A) und der zweite Abschnitt (110B, 120B) auf einer Seite und der erste Abschnitt (110A, 120A) und der zweite Abschnitt (110B, 120B) auf einer anderen Seite der Erhaltungsspule (110, 120) in Bezug auf die Mitte in Umfangsrichtung symmetrisch sind, wobei,
die Erhaltungsspule (110, 120) eine horizontale Achsenlinie überspannt, die durch eine zentrale Drehachse des Drehbereichs zur Erfassung (80, 83, 86) hindurch tritt, und
die Umfangsmitte der Erhaltungsspule (110, 120) vertikal von der horizontalen Achsenlinie verschoben ist.

8. Erfassungsvorrichtung für Fahrzeuge nach einem der Ansprüche 1 bis 7, wobei
der Verarbeitungsbereich (70) eine Querkraft, die auf das Rad (10) wirkt, auf der Grundlage der berechneten Verschiebung berechnet.

## Revendications

1. Dispositif de détection pour véhicules comprenant :
une section de base (42) pouvant être fixée à la carrosserie d'un véhicule ; et
un palier (50) ayant un élément de bague extérieure (51), un élément de bague intérieure (52) et des éléments roulants (53) disposés entre l'élément de bague extérieure (51) et l'élément de bague intérieure (52), le palier (50) étant configuré pour supporter de manière rotative une roue (10) du véhicule contre la section de base (42) ; dans lequel
un premier élément de palier (52) de l'élément de bague extérieure (51) et de l'élément de bague intérieure (52) peut être fixé à la roue (10), et un second élément de palier (51) de l'élément de bague extérieure (51) et de l'élément de bague intérieure (52) est fixé à la section de base (42) ;
le dispositif de détection pour véhicules comprenant en outre :
une section rotative en forme de disque pour la détection (80, 83, 86) disposée de manière à tourner d'un seul tenant avec le premier élément de palier (52) ; et
une section de détection de déplacement (90, 90A, 90B) disposée dans un état sans contact avec la section rotative pour la détection (80, 83, 86) à une position de la section de base (42) qui est distante du palier (50) dans la direction radiale et opposée à la section rotative pour la détection (80, 83, 86) dans la direction axiale du palier (50) et qui délivre un signal en réponse à un déplacement axial de la section rotative pour la détection (80, 83, 86),
**caractérisé en ce que**
la section rotative en forme de disque pour la détection (80, 83, 86) s'étend radialement vers l'extérieur du palier (50) par rapport au premier élément de palier (52),
une section cible de détection (81, 82, 84, 85, 87, 88) de forme annulaire et s'étendant dans une direction circonférentielle du palier (50) est formée à une position de la section rotative pour la détection (80, 83, 86) à l'écart du palier (50) dans la direction radiale,
la section de détection de déplacement (90, 90A, 90B) comprend :
une bobine de réception plane (110, 120) fixée à la section de base (42) et disposée à une position opposée à la section cible de détection (81, 82, 84, 85, 87, 88) dans la direction axiale et s'étendant dans une direction qui croise la direction axiale, et
une bobine d'excitation (100) à laquelle est appliquée une tension d'excitation en courant alternatif, dans lequel
la bobine de réception (110, 120) est induite par une tension lorsque la tension d'excitation est appliquée à la bobine d'excitation (100), et
une section de traitement (70) est prévue pour calculer le déplacement axial de la section rotative pour la détection (80, 83, 86) sur la base d'un signal de tension de sortie de la bobine de réception (110, 120).

2. Dispositif de détection pour véhicules selon la revendication 1, dans lequel la section cible de détection (81, 82, 84, 85, 87, 88) est conçue pour présenter :
une configuration dans laquelle une partie métallique (81) et une partie (82) percée dans la direction axiale sont disposées en alternance dans la direction circonférentielle,
une configuration dans laquelle une section concave (88) dont la concavité augmente dans la direction axiale et une section convexe (87) faisant saillie dans la direction axiale par rapport à la section concave (88) sont disposées en alternance dans la direction circonférentielle, ou
une configuration dans laquelle des parties métalliques et non métalliques sont disposées en alternance dans la direction circonférentielle, dans lequel
la section de traitement (70) calcule en outre un angle de rotation de la section de rotation pour la détection (80, 83, 86) sur la base du signal de tension de sortie de la bobine de réception (110, 120).

3. Dispositif de détection pour véhicules selon la revendication 2, dans lequel la bobine de réception (110, 120) comprend :
une première bobine de réception (110) à partir de laquelle une tension est induite lorsque la tension d'excitation est appliquée à la bobine d'excitation (100), et
une seconde bobine de réception (120) dans laquelle une tension déphasée par rapport à la tension induite de la première bobine de réception (110) est induite lorsque la tension d'excitation est appliquée à la bobine d'excitation (100), dans lequel
la section de traitement (70) calcule l'angle de rotation sur la base des signaux de tension de sortie des première et seconde bobines de réception (110 et 120).

4. Dispositif de détection pour véhicules selon l'une quelconque des revendications 1 à 3, dans lequel
la section de détection de déplacement (90, 90A, 90B) comprend une première section de détection de déplacement (90A) et une seconde section de détection de déplacement (90B),
la bobine de réception (110, 120) fournie par la première section de détection de déplacement (90A) est disposée dans la direction axiale opposée à une extrémité supérieure de la section rotative pour la détection (80, 83, 86), et
la bobine de réception (110, 120) fournie par la seconde section de détection de déplacement (90B) est disposée à l'opposé d'une extrémité inférieure de la section rotative pour la détection (80, 83, 86) dans la direction axiale.

5. Dispositif de détection pour véhicules selon l'une quelconque des revendications 1 à 3, dans lequel
la section de détection de déplacement (90, 90A, 90B) comprend une première section de détection de déplacement (90A) et une seconde section de détection de déplacement (90B),
la bobine de réception (110, 120) fournie par la première section de détection de déplacement (90A) est disposée à l'opposé d'une extrémité supérieure ou inférieure de la section rotative pour la détection (80, 83, 86) dans la direction axiale, et
la bobine de réception (110, 120) fournie par la seconde section de détection de déplacement (90B) est disposée sur un côté opposé de la bobine de réception (110, 120) fournie par la première section de détection de déplacement à travers la section de rotation pour la détection (80, 83, 86) dans la direction axiale.

6. Dispositif de détection pour véhicules selon la revendication 4 ou 5, dans lequel les première et seconde sections de détection de déplacement (90A et 90B) sont conçues de telle sorte qu'une phase du signal de tension de sortie de la bobine de réception (110, 120) fournie par la première section de détection de déplacement (90A) et une phase du signal de tension de sortie de la bobine de réception (110, 120) fournie par la seconde section de détection de déplacement (90B) sont les mêmes,
le dispositif de détection comprend en outre un amplificateur (AP) qui amplifie et délivre la différence entre le signal de tension de sortie de la bobine de réception (110, 120) fournie par la première section de détection de déplacement (90A) et le signal de tension de sortie de la bobine de réception (110, 120) fournie par la seconde section de détection de déplacement (90B), et
la section de traitement (70) calcule le déplacement sur la base du signal de tension de sortie de l'amplificateur (AP).

7. Dispositif de détection pour véhicules selon l'une quelconque des revendications 1 à 3, dans lequel
la bobine de réception (110, 120) comprend :
une première partie (110A, 120A) qui génère une première tension de polarité aux deux extrémités de la bobine de réception (110, 120) lorsque la tension d'excitation est appliquée à la bobine d'excitation (100), et
une seconde partie (110B, 120B) qui génère une seconde tension de polarité opposée à la première polarité aux deux extrémités de la bobine de réception (110, 120) lorsque la tension d'excitation est appliquée à la bobine d'excitation (100),
la bobine de réception (110, 120) est conçue pour présenter :
une configuration dans laquelle, dans une vue en plan de la bobine de réception (110, 120), la première partie (110A, 120A) est disposée d'un côté et la seconde partie (110B, 120B) est disposée d'un autre côté par rapport à un centre circonférentiel de la bobine de réception (110, 120), et la première partie (110A, 120A) et la seconde partie (110B, 120B) sont alignées dans la direction circonférentielle, ou
une configuration dans laquelle, dans une vue en plan de la bobine de réception (110, 120), la première partie (110A, 120A) et la seconde partie (110B, 110B) d'un côté et la première partie (110A, 120A) et la seconde partie (110B, 120B) d'un autre côté de la bobine de réception (110, 120) sont symétriques par rapport au centre dans la direction circonférentielle, dans lequel la bobine de réception (110, 120) enjambe une ligne d'axe horizontal passant par un axe central de rotation de la section rotative pour la détection (80, 83, 86), et
le centre circonférentiel de la bobine de réception (110, 120) est déplacé verticalement par rapport à la ligne d'axe horizontal.

8. Dispositif de détection pour véhicules selon l'une quelconque des revendications 1 à 7, dans lequel
la section de traitement (70) calcule une force latérale agissant sur la roue (10) sur la base du déplacement calculé.
